# EUROPEAN PATENT APPLICATION

(11) **EP 2 479 057 A1**
(43) Date of publication of application: **25.07.2012**
(21) Application number: 10815160.6
(22) Date of filing: 13.09.2010
(51) Int. Cl.: B60K 37/02, B60K 35/00, F21S 2/00, G02B 6/00, G02F 1/1333

(54) **INDICATOR FOR SADDLED VEHICLE, AS WELL AS SADDLED VEHICLE**

(30) Priority: 14.09.2009 JP 2009212265
(71) Applicant: Yamaha Motor Electronics Co., Ltd., Shuchi-gun Shizuoka 437-0292 (JP)
(72) Inventor: YAMASHITA, Kyouji, Shuchi-gun Shizuoka 437-0292 (JP)
(74) Representative: Grünecker, Kinkeldey, Stockmair & Schwanhäusser
(86) International application number: PCT/JP2010/005571
(87) International publication number: WO 2011/030560

(57) **Abstract**

An electronic component is mounted on a main region of a printed circuit board, and an LED is mounted on an end region of the printed circuit board. A holding plate is placed on the printed circuit board, and a light guide sheet is placed on the holding plate. A main region of the holding plate is formed in a flat shape, and an end region of the holding plate is curved in a convex shape and inclined obliquely downwardly from the main region, and further curved in a concave shape to be horizontal near its lateral side. The printed circuit board is fixed to an upper case while the light guide sheet is placed on the holding plate. Thus, an end surface of the end region of the light guide sheet is curved to be opposite to a light emitting surface of the LED on the printed circuit board.

## Description

### [Technical Field]

The present invention relates to a display for a saddle-straddling type vehicle, and a saddle-straddling type vehicle including the display.

### [Background Art]

Saddle-straddling type vehicles such as motorcycles are provided with displays that display information including traveling speed and so on. There has been developed a display using a liquid crystal display panel as the display for such a vehicle. A backlight device that irradiates a back surface of the liquid crystal display panel with light is required for performing display using the liquid crystal display panel.

Light guide sheets have recently been used in surface light sources such as backlight devices. Patent Document 1 discloses a lighting unit using the light guide sheet. The lighting unit is used for irradiating an operation region of a cellular telephone or the like with light.
[Patent Document 1] JP 2008-204652 A

### [Summary of Invention]

### [Technical Problem]

A display for an automobile is provided on a front panel of a driver's seat. Thus, a space for attaching the display is relatively less restricted. Accordingly, there is a higher degree of freedom in arrangement of a liquid crystal display panel, a back light device and a printed circuit board. In contrast, a display for a saddle-straddling type vehicle is usually attached to a handle. Alternatively, the display for a saddle-straddling type vehicle is attached to a front cover provided on the handle. Thus, the space for attaching the display for a saddle-straddling type vehicle is restricted in width and depth. Accordingly, the display for a saddle-straddling type vehicle is required to be downsized compared to the display for an automobile.

An object of the present invention is to provide a display for a saddle-straddling type vehicle that can be downsized and a saddle-straddling type vehicle including such a display.

### [Solution to Problem]

According to an aspect of the present invention, a display for a saddle-straddling type vehicle includes a printed circuit board, a liquid crystal display panel arranged on a partial region of the printed circuit board at a distance from the printed circuit board, a light guide sheet arranged between the printed circuit board and the liquid crystal display panel, an electronic component mounted in the partial region of the printed circuit board, a first light emitting device mounted in a first region outside the partial region of the printed circuit board, a supporting member that supports the light guide sheet on the electronic component mounted in the partial region , and a case that accommodates the printed circuit board, the liquid crystal display panel, the light guide sheet and the supporting member, wherein the case has a window for visually confirming a display screen of the liquid crystal display panel, the electronic component constitutes at least part of an electronic circuit connected to the liquid crystal display panel and the first light emitting device, the light guide sheet has an end surface on which light can be incident, one surface which is opposite to the liquid crystal display panel and from which light can be emitted, and another surface being in contact with the supporting member, and part of the light guide sheet is curved to extend to the first region of the printed circuit board such that the end surface faces a light emitting surface of the first light emitting device.

The one surface of the light guide sheet is a first main surface, and the other surface of the light guide sheet is a second main surface. The second main surface of the light guide sheet is a surface opposite to the first main surface.

In the display for a saddle-straddling type vehicle, the supporting member arranged between the printed circuit board and the light guide sheet supports the light guide sheet on the electronic component mounted on the printed circuit board. Accordingly, the electronic component can be mounted in a region of the printed circuit board between the printed circuit board and the light guide sheet. Furthermore, part of the light guide sheet is curved to extend to the first region of the printed circuit board such that the end surface of the light guide sheet faces the light emitting surface of the first light emitting device. This allows the light of the first light emitting device to be easily and accurately incident on the end surface of the light guide sheet. In this way, the supporting member, the light guide sheet and the liquid crystal display panel are arranged in order on the electronic component mounted on the printed circuit board. Accordingly, the printed circuit board, the supporting member, the light guide sheet and the liquid crystal display panel can be accommodated in the small case. This enables downsizing of the display for the saddle-straddling type vehicle.

The supporting member may have a contact surface coming into contact with the other surface of the light guide sheet. The contact surface may have a flat portion that is positioned between the partial region of the printed circuit board and the liquid crystal display panel, and a curved portion that curves so as to come close to the first light emitting device from the flat portion.

In this case, the other surface of the light guide sheet comes into contact with the contact surface of the supporting member. Accordingly, the one surface of the light guide sheet, which is opposite to the liquid crystal display panel is held to be flat by the flat portion of the supporting member, and the shape of the curved part of the light guide sheet is held by the curved portion of the supporting member. This prevents deformation of the light guide sheet.

The contact surface of the supporting member may be formed so as to reflect light. In this case, the light leaking out from the other surface of the light guide sheet is reflected by the contact surface of the supporting member. Accordingly, the light is efficiently emitted from the one surface of the light guide sheet.

The case may have a shape holder arranged to hold the shape of the curved part of the light guide sheet, wherein the shape holder may include a contact portion having a cross-sectional shape that corresponds to the curved portion of the supporting member, and the curved part of the light guide sheet may be arranged so as to be sandwiched between the contact portion of the shape holder and the curved portion of the supporting member.

In this case, part of the light guide sheet is sandwiched between the contact portion of the shape holder of the case and the curved portion of the supporting member, so that that part of the light guide sheet is held in the curved shape along the curved portion of the supporting member. This causes the end surface of the light guide sheet to be reliably opposite to the first light emitting device.

The shape holder may have a positioning projection, the light guide sheet may have a positioning hole through which the positioning projection of the shape holder passes, and the supporting member may have a positioning hole in which the positioning projection of the shape holder is inserted.

In this case, the positioning projection of the shape holder is inserted in the positioning hole of the supporting member through the positioning hole of the light guide sheet while the part of the light guide sheet is sandwiched between the contact portion of the shape holder of the case and the curved portion of the supporting member. Accordingly, the supporting member, the light guide sheet and the shape holder are accurately positioned with one another, and the supporting member and the light guide sheet are held in the case. Furthermore, the supporting member and the light guide sheet can be easily positioned within the case in assembly of the display for the saddle-straddling type vehicle.

The printed circuit board may have a positioning opening, and the supporting member may have a convex portion to be fitted in the positioning opening of the printed circuit board. In this case, the printed circuit board and the supporting member are accurately positioned with each other. In addition, the printed circuit board and the supporting member can be easily positioned in the assembly of the display for the saddle-straddling type vehicle.

The supporting member may have a connection opening, and the display for the saddle-straddling type vehicle may further include a connecting member, wherein the connecting member may be inserted into the connection opening of the supporting member to electrically connect the printed circuit board and the liquid crystal display panel.

In this case, the printed circuit board and the liquid crystal display panel can be electrically connected to each other without using any lines that bypass the supporting member. Accordingly, the configuration of the display for the saddle-straddling type vehicle is simplified.

The display for the saddle-straddling type vehicle may further include a second light emitting device mounted in a second region outside the partial region of the printed circuit board, and the window of the case may be formed such that the second light emitting device can be visually confirmed.

In this case, the second light emitting device can be used as a display lamp that displays a certain state of the second light emitting device.

The supporting member may further have a cylindrical body that surrounds the second light emitting device. In this case, no external light is incident on the second light emitting device. Accordingly, good visibility of the second light emitting device is achieved.

The first light emitting device may be a light emitting diode. In this case, backlight with higher luminance is realized at lower cost. This allows for lower cost of the display for the saddle-straddling type vehicle and improved visibility of the liquid crystal display panel.

According to another aspect of the present invention, a saddle-straddling type vehicle includes a main body, a driving unit for moving the main body, and the display for the saddle-straddling type vehicle according to the one aspect of the present invention described above, wherein the display for the saddle-straddling type vehicle displays the state of at least one of the main body and the driving unit.

In the saddle-straddling type vehicle, the main body is moved by the driving unit. In addition, the state of at least one of the main body and the driving unit is displayed on the display.

According to the one aspect of the present invention, the display can be downsized. This allows for reduced space for attaching the display in the saddle-straddling type vehicle.

### [Advantageous Effects of Invention]

According to the present invention, the display for the saddle-straddling type vehicle can be downsized.

### [Brief Description of Drawings]

[FIG. 1] FIG. 1 is a plan view of a display according to one embodiment of the present invention.
[FIG. 2] FIG. 2 is an exploded perspective view of the display of Fig. 1 seen from a position in an obliquely upward direction from the display.
[FIG. 3] FIG. 3 is an exploded perspective view of the display of Fig. 1 seen from a position in an obliquely downward direction from the display.
[FIG. 4] FIG. 4 is a plan view of a lower case.
[FIG. 5] FIG. 5 is a plan view of a printed circuit board.
[FIG. 6] FIG. 6 is a plan view of a holding plate.
[FIG. 7] FIG. 7 is a plan view of a light guide sheet.
[FIG. 8] FIG. 8 is a bottom view of an upper case.
[FIG. 9] FIG. 9 is a sectional view of a main part of the display according to the present embodiment.
[FIG. 10] FIG. 10 is an enlarged sectional view of the B portion of the display of Fig. 9.
[FIG. 11] FIG. 11 is a side view of a motorcycle including the display shown in Figs. 1 to 10.
[FIG. 12] FIG. 12 is a plan view of a portion of the motorcycle of Fig. 11 including the display.

### [Description of Embodiments]

Description will be made of a display for a saddle-straddling type vehicle according to embodiments of the present invention with reference to the drawings. The display according to the present embodiments is attached to a saddle-straddling type vehicle such as a motorcycle.

### (1) Entire Configuration of the Display

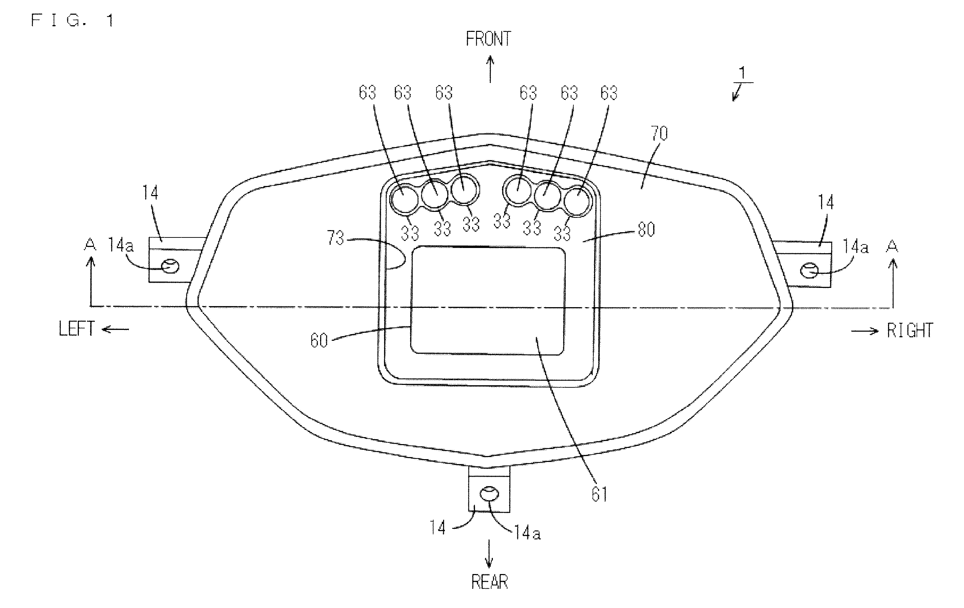

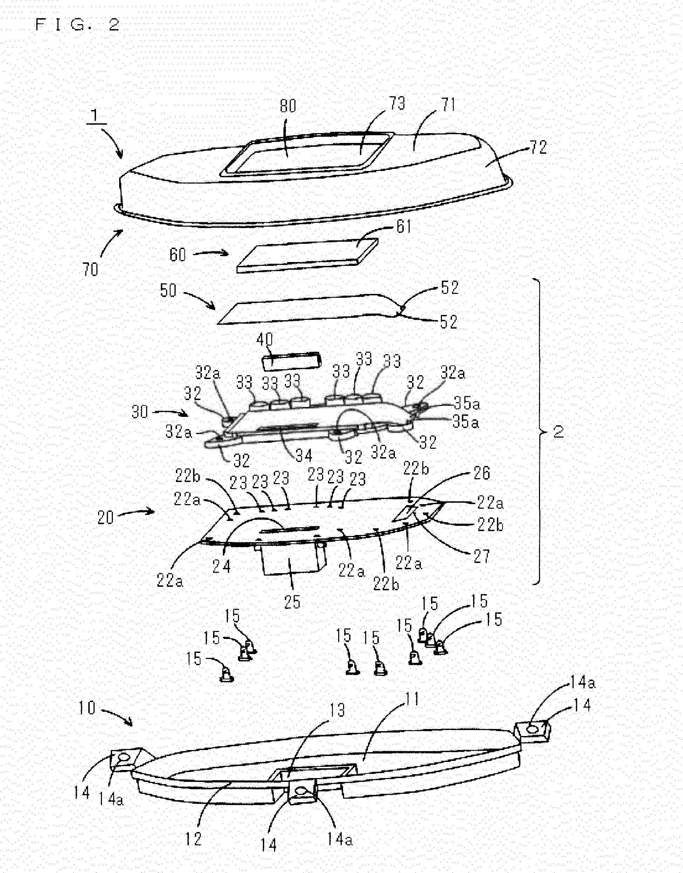

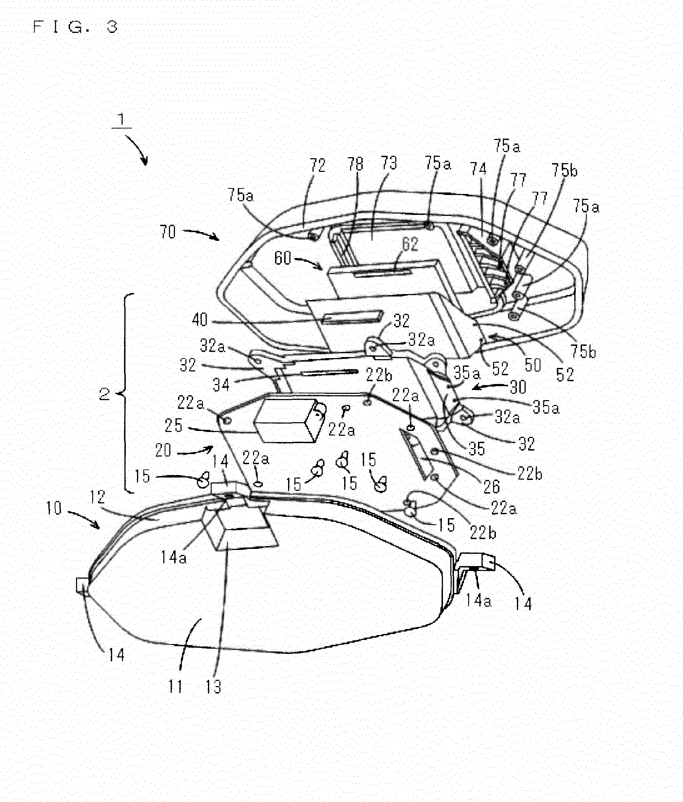

Fig. 1 is a plan view of the display according to one embodiment of the present invention. Fig. 2 is an exploded perspective view of the display of Fig. 1 seen from a position in an obliquely upward direction from the display, and Fig. 3 is an exploded perspective view of the display of Fig. 1 seen from a position in an obliquely downward direction from the display. Front, rear, left and right directions from the display being attached to a saddle-straddling type vehicle are indicated by the arrows in Fig. 1 and Figs. 4 to 8 described below.

As shown in Fig. 1, a display window 73 is provided on an upper surface of an upper case 70 of the display 1. A transparent protection cover 80 is attached to the display window 73. A liquid crystal display panel 60 having a liquid crystal display screen 61 is provided in a center portion within the display window 73. A plurality of display portions 63 are provided in a front portion within the display window 73. A user can visually confirm the liquid crystal display screen 61 and the plurality of display portions 63 within the display window 73 through the protection cover 80.

The liquid crystal display screen 61 displays information including traveling speed and distance of the vehicle, time, remaining amount of fuel and so on using characters or figures. The plurality of display portions 63 display warning of water temperature, a state of an upper beam, blinking of a hazard light, a state of a neutral position, insertion of a key and so on using figures.

As shown in Figs. 2 and 3, the display 1 is constituted by a lower case 10, a printed circuit board 20, a holding plate 30, a connecting member 40, a light guide sheet 50, the liquid crystal display panel 60 and the upper case 70.

A backlight device 2 is constituted by the printed circuit board 20, the holding plate 30 and the light guide sheet 50. A lower surface (back surface) of the liquid crystal display panel 60 is irradiated with light by the backlight device 2.

Detailed description will be made of the configurations of the printed circuit board 20, the holding plate 30, the connecting member 40, the light guide sheet 50, the liquid crystal display panel 60 and the upper case 70.

### (2) Each Component of the Display

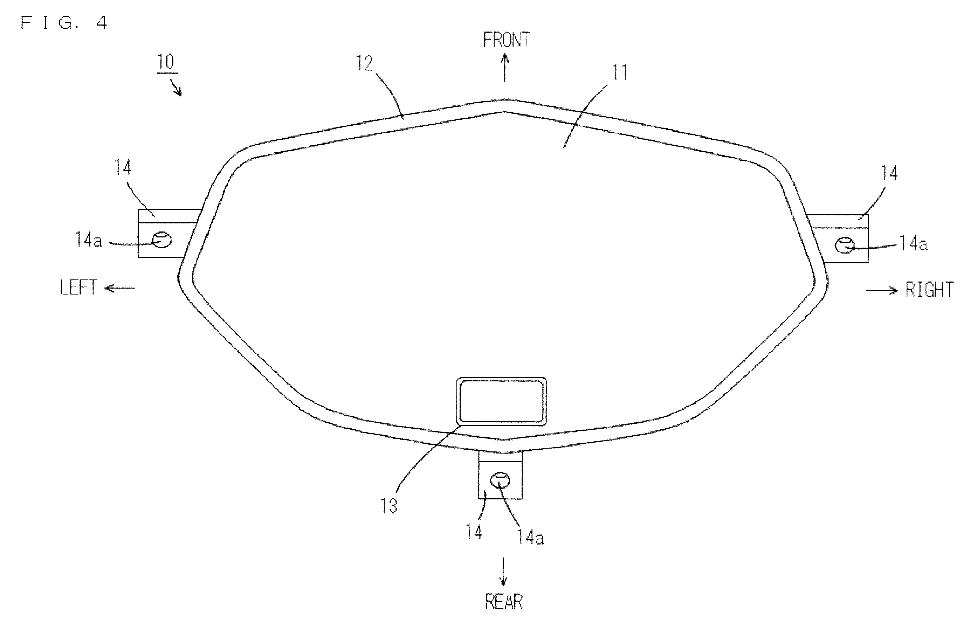

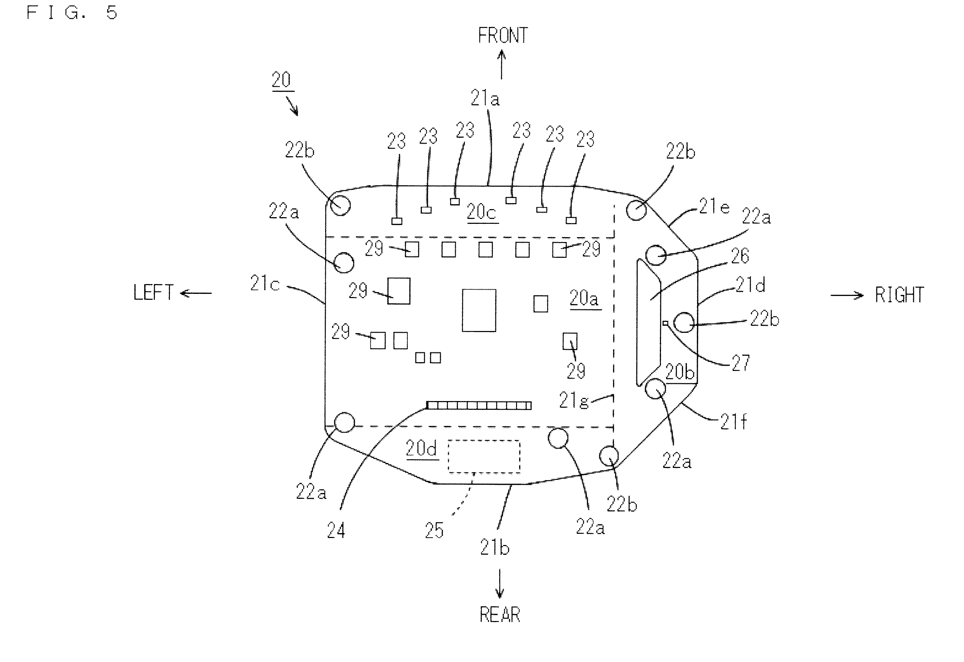

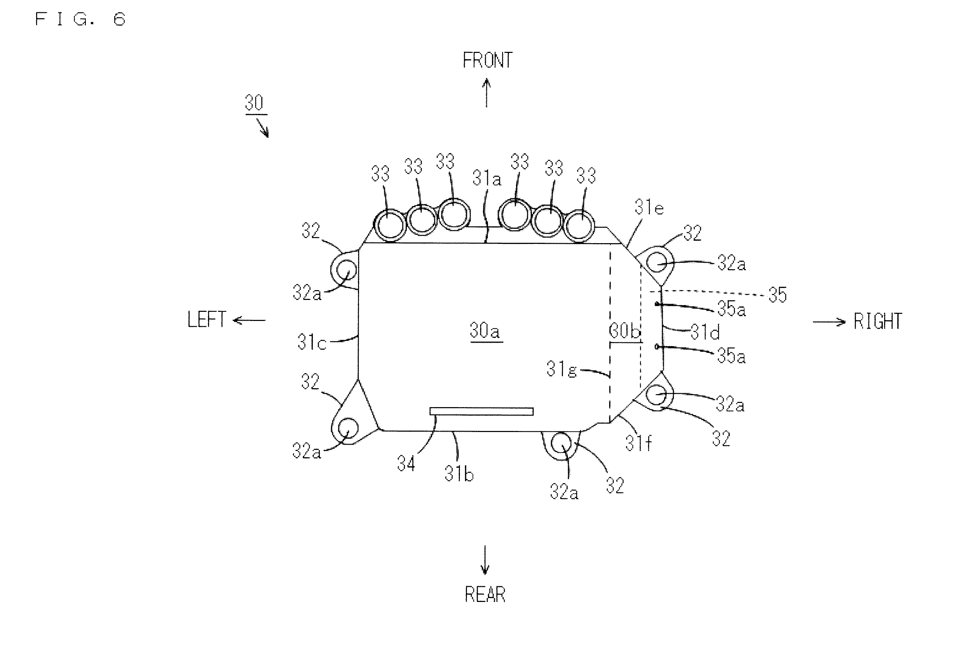

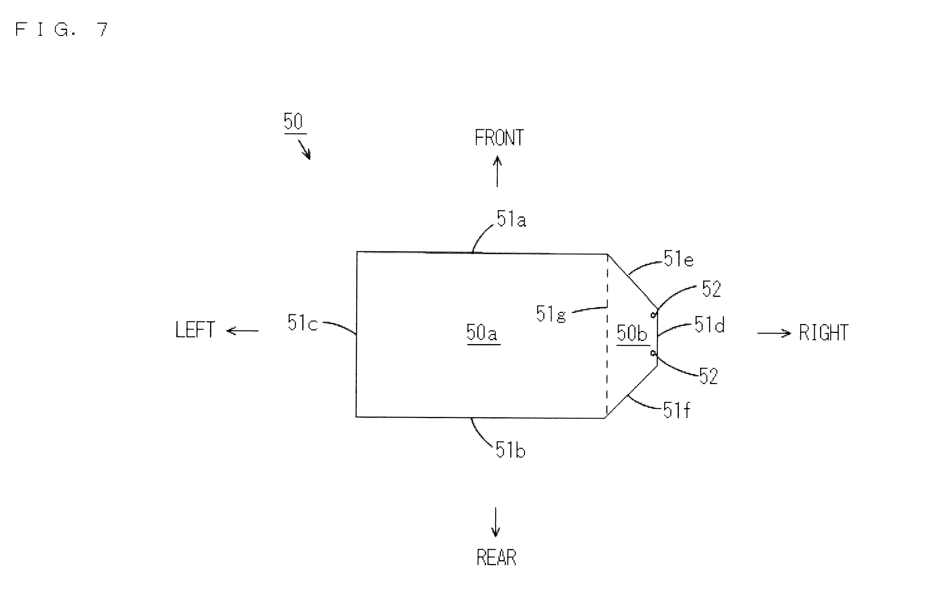

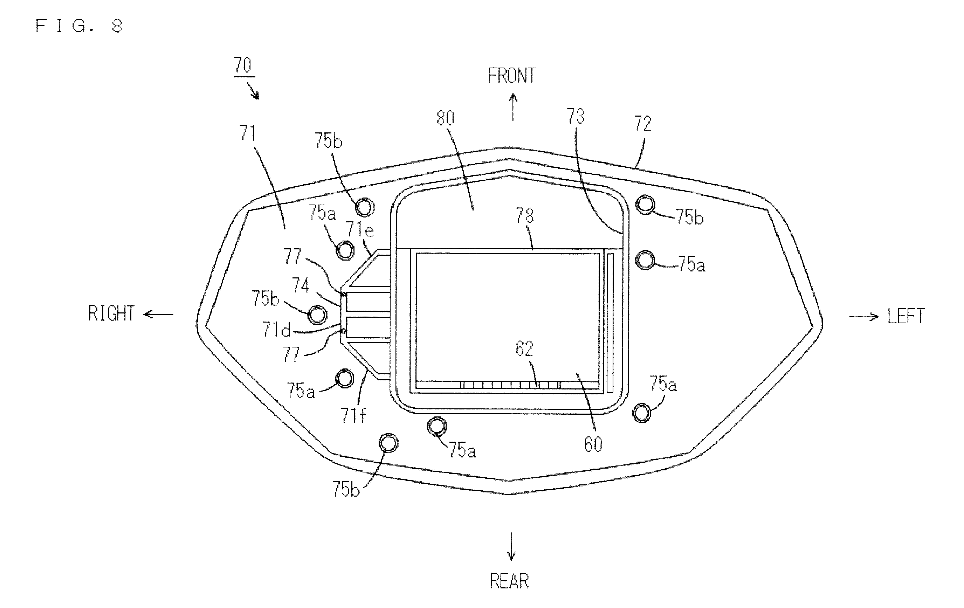

Fig. 4 is a plan view of the lower case 10, Fig. 5 is a plan view of the printed circuit board 20, Fig. 6 is a plan view of the holding plate 30, Fig. 7 is a plan view of the light guide sheet 50, and Fig. 8 is a bottom view of the upper case 70.

As shown in Fig. 4, the lower case 10 has a bottom surface portion 11 and a side surface portion 12. The bottom surface portion 11 has a flat and substantially octagon shape, and symmetrically formed with respect to the center line. The side surface portion 12 is integrally formed with the bottom surface portion 11 along the outer periphery of the bottom surface portion 11. The lower case 10 is formed of resin, for example.

A rectangular opening 13 is formed at the center on a rear side of the bottom surface portion 11. Attachment portions 14 are provided at the center on a rear side and left and right ends of the side surface portion 12 so as to outwardly project. A screw hole 14a is formed in each of the attachment portions 14.

As shown in Fig. 5, the printed circuit board 20 is a rigid printed circuit board having a plate-like shape. The printed circuit board 20 has a rectangular main region 20a, a substantially trapezoidal end region 20b, a front region 20c extending right and left, and a rear region 20d extending right and left. The main region 20a has area equal to the area of a back surface of the liquid crystal display panel 60 of Figs. 2 and 3. The main region 20a and the end region 20b are arranged such that one lateral side of the main region 20a and a bottom side of the end region 20b are coupled to each other. The front region 20c is adjacent to the front of the main region 20a, and the rear region 20d is adjacent to the rear of the main region 20a.

Therefore, the printed circuit board 20 has a front side 21a, a rear side 21b, a lateral side 21c, a lateral side 21d, an oblique side 21e and an oblique side 21f. The front side 21a and the rear side 21b are substantially parallel with each other. The lateral side 21c and the lateral side 21d are substantially parallel with each other, and substantially perpendicular to the front side 21a and the rear side 21b. The oblique side 21e and the oblique side 21f are each inclined toward the lateral side 21d. A boundary line 21g between the main region 20a and the end region 20b is parallel with the lateral sides 21c, 21d.

A plurality of screw holes 22a, 22b are formed along an outer peripheral portion of the printed circuit board 20. A plurality of electronic components 29 and a plurality of LEDs (Light Emitting Diodes) 23 are mounted on an upper surface of the main region 20a of the printed circuit board 20. Thepluralityof electronic components 29 are, for example, a CPU (Central Processing Unit), a resistor, a capacitor, a diode and a transistor. The plurality of LEDs 23 are arranged along the front side 21a in the front region 20c of the printed circuit board 20. A connection terminal row 24 composed of a plurality of connection terminals that are linearly arranged are provided on the upper surface of the main region 20a of the printed circuit board 20. A connector 25 having a rectangular parallelepiped shape is mounted near the rear side 21b on a lower surface of the rear region 20d of the printed circuit board 20. A plurality of electronic components are also mounted on the lower surface of the printed circuit board 20.

An opening 26 having a trapezoidal shape is formed in the end region 20b of the printed circuit board 20. The opening 26 has a long side, a short side and two oblique sides. The long side, the short side and the two oblique sides are arranged to be parallel with the boundary line 21g, the lateral side 21d and the oblique sides 21e, 21f of the printed circuit board 20, respectively.

AsideviewLED (Light Emitting Diode) 27 ismounted near the short side of the opening 26 on an upper surface of the end region 20b of the printed circuit board 20. The side view LED 27 emits light from its side surface.

As shown in Fig. 6, the holding plate 30 has a main region 30a having a rectangular shape and an end region 30b having a trapezoidal shape. The main region 30a and the end region 30b are arranged such that one lateral side of the main region 30a and a bottom side of the end region 30b are coupled with each other.

Therefore, the holding plate 30 has a front side 31a, a rear side 31b, a lateral side 31c, a lateral side 31d, an oblique side 31e and an oblique side 31f. The front side 31a and the rear side 31b are substantially parallel with each other. The lateral side 31c and the lateral side 31d are parallel with each other, and perpendicular to the front side 31a and the rear side 31b. The oblique side 31e and the oblique side 31f are each inclined toward the lateral side 31d. A boundary line 31g between the main region 30a and the end region 30b is parallel with the lateral sides 31c, 31d.

A plurality of attachment portions 32 are provided to outwardly project from the lateral side 31c, the rear side 31b, the oblique sides 31e and 31f of the holding plate 30, respectively. A screw hole 32a is formed in each attachment portion 32. The plurality of screw holes 32a are provided inpositions corresponding to the screw holes 22a of the printed circuit board 20 of Fig. 5.

A plurality of cylindrical bodies 33 are integrally formed at the front side 31a of the holding plate 30. The plurality of cylindrical bodies 33 are arranged in positions corresponding to the plurality of LEDs 23 on the printed circuit board 30 of Fig. 5.

A slit 34 is formed parallel to the rear side 31b of the holding plate 30. The slit 34 has such measurements that the connecting member 40 of Figs. 2 and 3 can be inserted therein, and is provided in a position corresponding to the connection terminal row 24 on the printed circuit board 30 of Fig. 5.

A convex portion 35 having a trapezoidal shape is formed along the lateral side 31d on a lower surface of the end region 30b of the holding plate 30. The shape of the convex portion 35 corresponds to the shape of the opening 26 of the printed circuit board 20 of Fig. 5. Accordingly, the convex portion 35 of the holding plate 30 can be fitted in the opening 26 of the printed circuit board 20.

Two holes 35a are formed near the lateral side 31d of the end region 30b of the holding plate 30 to penetrate the convex portion 35. The cross sectional shape of the end region 30b of the holding plate 30 will be described in detail below. The holding plate 30 is integrally formed of resin, for example. An upper surface of the holding plate 30 is processed to have a mirror finish so as to reflect light.

The connecting member 40 shown in Figs. 2 and 3 has a plurality of metallic connection lines (connecting rods) extending parallel to one another within a plate-like resin member. One ends of the plurality of connection lines are exposed on a lower end surface of the resin member, and the other ends of the plurality of connection lines are exposed on an upper end surface of the resin member. The one ends of the plurality of connection lines exposed on the lower end surface of the connecting member 40 can be brought into contact with the connection terminal row 24 of the printed circuit board 20 while the connecting member 40 is inserted in the slit 34 of the holding plate 30.

As shown in Fig. 7, the light guide sheet 50 has a main region 50a having a rectangular shape and an end region 50b having a trapezoidal shape. The main region 50a and the end region 50b are arranged such that one lateral side of the main region 50a and a bottom side of the end region 50b are coupled with each other. In other words, the main region 50a of the light guide sheet 50 has the same shape as that of a liquid crystal display screen 61 of the liquid crystal display panel 60, and the end region 50b has a width that gradually increases towards the one lateral side of the main region 50a.

Therefore, the light guide sheet 50 has a front side 51a, a rear side 51b, a lateral side 51c, a lateral side 51d, an oblique side 51e and an oblique side 51f. The front side 51a and the rear side 51b are parallel with each other. The lateral side 51c and the lateral side 51d are parallel with each other, and perpendicular to the front side 51a and the rear side 51b. The oblique side 51e and the oblique side 51f are each inclined toward the lateral side 51d. A boundary line 51g between the main region 50a and the end region 50b is parallel with the lateral sides 51c, 51d.

Two holes 52 are formed near the lateral side 51d of the end region 50b of the light guide sheet 50. The holes 52 of the light guide sheet 50 are provided in positions corresponding to the holes 35a of the holding plate 30 of Fig. 6.

The light guide sheet 50 is flexible, and formed of transparent resin such as acrylic resin, polycarbonate, polyvinyl chloride, polyethylene terephthalate or polypropylene. The light guide sheet 50 is formed of acrylic resin in the present embodiment.

Light incident on an end surface along the lateral side 51d of the light guide sheet 50 is introduced to the main region 50a through the end region 50b, and upwardly emitted from an upper surface of the main region 50a. A plurality of diffusion dots are formed on a lower surface of the light guide sheet 50. This causes the lower surface of the main region 50a to have a function of reflecting light upward. The cross sectional shape of the light guide sheet 50 will be described in detail below.

Fig. 8 shows the upper case 70 that is seen from below. Therefore, the left and right direction of the upper case 70 of Fig. 8 is opposite to that of the upper case 70 of Fig. 1 and the lower case 10 of Fig. 4.

As shown in Fig. 8, the upper case 70 has an upper surface portion 71 and a side surface portion 72. The upper surface portion 71 has a flat and substantially octagon shape, and symmetrically formed with respect to the center line. The side surface portion 72 is integrally formed with the upper surface portion 71 along the outer periphery of the upper surface portion 71. The upper case 70 is formed of resin, for example.

The display window 73 having the rectangular shape is formed on a center portion of the upper surface portion 71 as described referring to Fig. 1. A holding portion 74 having a substantially trapezoidal shape is provided along one lateral side of the display window 73 on a lower surface side of the upper surface portion 71. The holing portion 74 has a lateral side 71d, an oblique side 71e and an oblique side 71f. The shape of the holding portion 74 corresponds to the shape of the end region 30b of the holding plate 30 of Fig. 6. Two positioning projections 77 are formed near the lateral side 71d of the holding portion 74. The positioning projections 77 of the holding portion 74 are provided in positions corresponding to the holes 35a of the holding plate 30 of Fig. 6 and the holes 52 of the light guide sheet 50 of Fig. 7. The cross sectional shape of the holding portion 74 will be described in detail below.

A plurality of screw fixing portions 75a, 75b each having a cylindrical shape are formed to surround the display window 73 and the holding portion 74 on the lower surface side of the upper surface portion 71. Female screws are formed in inner surfaces of the plurality of screw fixing portions 75a, 75b. The plurality of screw fixing portions 75a are provided in positions corresponding to the screw holes 22a of the printed circuit board 20 of Fig. 5. The plurality of screw fixing portions 75b are provided in positions corresponding to the screw holes 22b of the printed circuit board 20 of Fig. 5.

A frame portion 78 having a rectangular shape is integrally formed with the upper surface portion 71 inside the display window 73 of the upper case 70. Fig. 8 shows the liquid crystal display panel 60 being fitted inside the frame portion 78. A connection terminal row 62 composed of a plurality of connection terminals that are linearly arranged along a rear side is provided on the lower surface of the liquid crystal display panel 60. The other ends of the plurality of connection lines exposed on the upper end surface of the connecting member 40 shown in Figs. 2 and 3 can be in contact with the connection terminal row 62 of the liquid crystal display panel 60.

### (3) How to Assemble the Display

Here, description is made of how to assemble the display 1 while referring to Figs. 2 and 3.

The liquid crystal display panel 60 is fitted inside the frame portion 78 (Fig. 3) of the upper case 70 for assembling the display 1. The holding plate 30 is placed on the printed circuit board 20. At this time, the convex portion 35 on the lower surface of the holding plate 30 is fitted in the opening 26 of the printed circuit board 20.

The connecting member 40 is inserted in the slit 34 of the holding plate 30. The light guide sheet 50 is placed in a region between the slit 34 and the plurality of cylindrical bodies 33 of the holding plate 30. At this time, the positioning projections 77 of the holding portion 74 of the upper case 70 are inserted in the holes 52 of the light guide sheet 50 and the holes 35a of the holding plate 30. Accordingly, the holding plate 30 and the light guide sheet 50 are positioned on the printed circuit board 20.

In this state, apluralityof screws 15 are attached to the screw fixing portions 75a of the upper case 70 through the plurality of screw holes 22a of the printed circuit board 20 and the plurality of screw holes 35a of the holding plate 30. A plurality of screws 15 are attached to the screw fixing portion 75b of the upper case 70 through the plurality of screw holes 22b of the printed circuit board 20. This causes the printed circuit board 20, the holding plate 30, the light guide sheet 50 and the liquid crystal display panel 60 to be fixed to the upper case 70. Moreover, the lower case 10 and the upper case 70 are joined to each other.

### (4) Cross Sectional Configuration of the Display

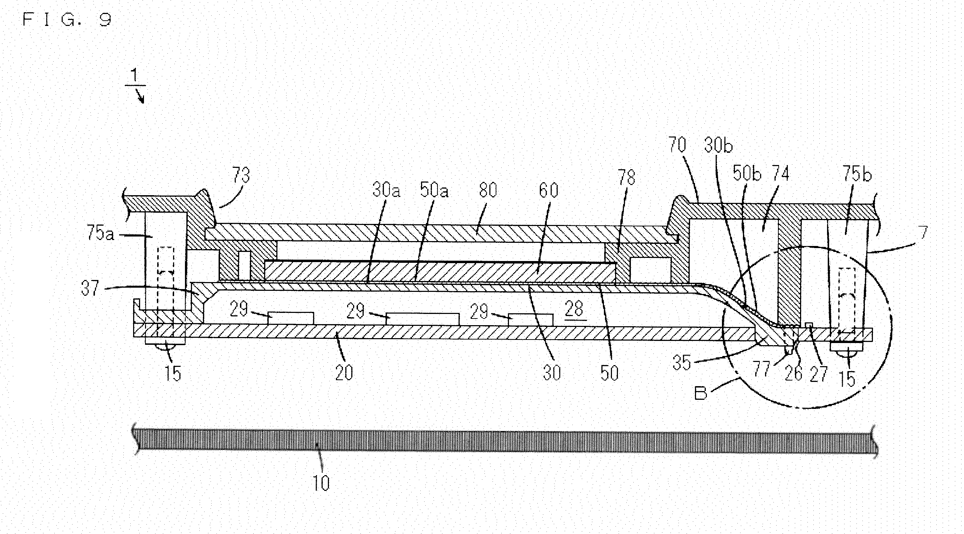

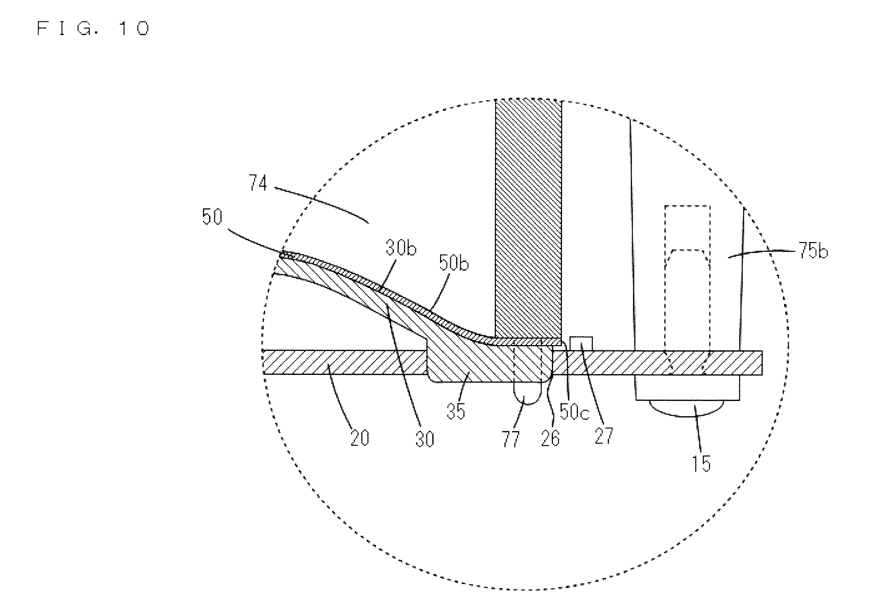

Fig. 9 is a sectional view of a main part of the display 1 according to the present embodiment. Fig. 10 is an enlarged sectional view of the B portion of the display 1 of Fig. 9.

As shown in Fig. 9, the main region 30a of the holding plate 30 is formed to be flat. The end region 30b of the holding plate 30 is curved in a convex shape and inclined obliquely downwardly from the main region 30a, and further curved in a concave shape to be horizontal near the lateral side 31d (see Fig. 6) . A raised edge 3 7 (see Fig. 9) is provided at the front side 31a, the rear side 31b and the lateral side 31c (see Fig. 6) of the holding plate 30 to project toward a lower surface side. The convex portion 35 on the lower surface of the end region 30b is fitted in the opening 26 of the printed circuit board 20, and a lower surface of the raised edge 37 of the main region 30a is in contact with the upper surface of the printed circuit board 20. Thus, a space 28 having a given thickness is ensured on the upper surface side of the printed circuit board 20. This allows the plurality of electronic components 29 to be mounted on the upper surface of the printed circuit board 20.

The shape of a lower surface of the holding portion 74 of the upper case 70 corresponds to an upper surface of the end region 30b of the holding plate 30.

The printed circuit board 20 is fixed to the upper case 70 by the screws 15 while the light guide sheet 50 is placed on the holding plate 30. In this case, portions near the front side 51a, the rear side 51b, the lateral side 51c and the boundary line 51g (see Fig. 7) of the main region 50a of the light guide sheet 50 are sandwiched between an upper surface of the main region 30a of the holding plate 30 and a lower surface of the frame portion 78 of the upper case 70. Accordingly, the main region 50a of the light guide sheet 50 is held in a flat state. In this case, the lower surface of the main region 50a of the light guide sheet 50 comes in contact with the upper surface of the main region 30a of the holding plate 30.

The end region 50b of the light guide sheet 50 is sandwiched between the upper surface of the end region 30b of the holding plate 30 and the lower surface of the holding portion 74 of the upper case 70. Thus, the end region 50b of the light guide sheet 50 is curved along the upper surface of the end region 30b of the holding plate 30. In this case, a lower surface of the end region 50b of the light guide sheet 50 comes in contact with the upper surface of the end region 30b of the holding plate 30. As a result, as shown in Fig. 9, the end region 50b of the light guide sheet 50 is curved in a convex shape and inclined obliquely downwardly from the boundary line 51g (see Fig. 7) between the main region 50a and the end region 50b, and further curved in a concave shape to be horizontal near the lateral side 51d (see Fig. 7).

As shown in Fig. 10, the LED 27 is mounted on the printed circuit board 20 near an end surface 50c positioned along the lateral side 51d (see Fig. 7) of the light guide sheet 50. The LED 27 has a rectangular parallelepiped shape, and has a side surface that emits light (hereinafter referred to as a light emitting surface) . A bottom surface of the LED 27 is directly joined to the upper surface of the printed circuit board 20, and the light emitting surface of the LED 27 is opposite to the end surface 50c of the light guide sheet 50. At this time, the height from the upper surface of the printed circuit board 20 to an upper end of an end surface of the end region 30b of the holding plate 30 is previously set such that the height of the center of the light emitting surface of the LED 27 is positioned at the height of the center of the end surface 50c of the light guide sheet 50.

A pair of electrodes of the LED 27 is electrically connected to wiring traces on the printed circuit board 20. The plurality of electronic components 29 mounted on the printed circuit board 20 constitute a display control circuit. The display control circuit is electrically connected to the plurality of LEDs 23, 27, the connection terminal row 24 and the connector 25 (Figs. 2 and 3). The connection terminal row 24 (Fig. 2) is electrically connected to the connection terminal row 62 (Fig. 3) of the liquid crystal display panel 60 through the connecting member 40.

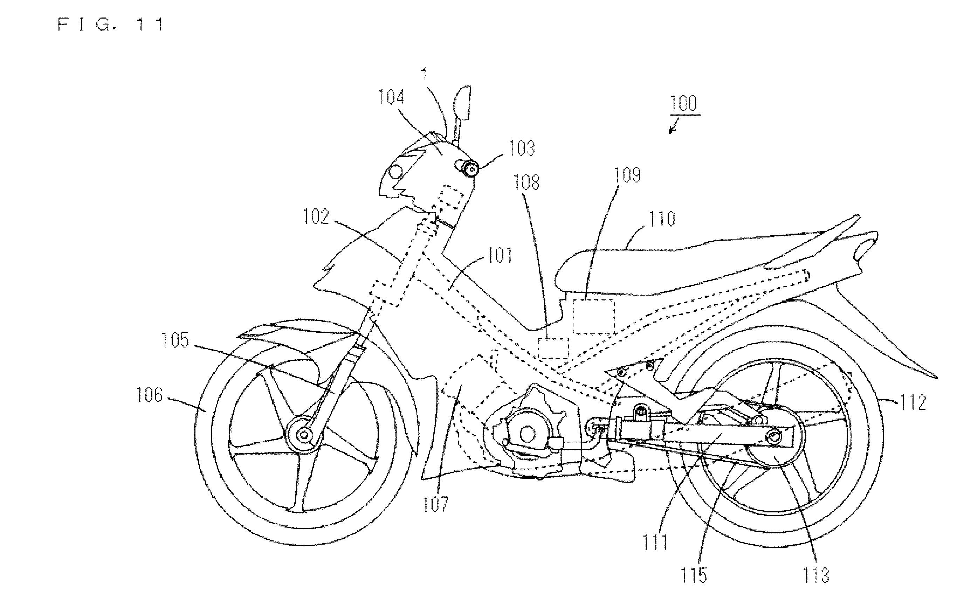

A control signal is applied from an ECU (Electronic Control Unit; see Fig. 11, described below) 108 to the display control circuit through the connector 25 shown in Figs. 2 and3. The display control circuit controls display operation of the liquid crystal display panel 60 based on the control signal, and controls lighting/non-lighting of the plurality of LEDs 23 mounted on the main region 20a and the LED 27 mounted on the end region 20b of the printed circuit board 20.

### (5) Operation of the Display

The light generated by the LED 27 of Fig. 10 is incident on the end surface 50c of the light guide sheet 50. The light proceeds through the end region 50b while being reflected on the upper surface and the lower surface of the end region 50b, and is introduced to the main region 50a of Fig. 9. The light introduced to the main region 50a is reflected on the lower surface of the main region 50a, and emitted from the upper surface of the main region 50a. This causes the back surface of the liquid crystal display panel 60 to be irradiated with the light. As a result, the user can visually confirm the information displayed on the liquid crystal display screen 61 of the liquid crystal display panel 60 through the transparent protection cover 80 within the display window 73 shown in Fig. 1.

The LEDs 23 mounted on the printed circuit board 20 of Fig. 5 are positioned within the plurality of cylindrical bodies 33, respectively, inside the display window 73. Figures indicating warning of water temperature, a state of an upper beam, blinking of a hazard light, a state of a neutral position, insertion of a key and so on are displayed on respective positions of the protection cover 80 above the plurality of cylindrical bodies 33. Each display portion 63 is constituted by the LED 23, the cylindrical body 33 and the figure on the protection cover 80. The LED 23 within the cylindrical body 33 is lighted, so that the user can visually confirm the figure of the display portion 63.

### (6) Effects of the Embodiment

The distance (the space 28 of Fig. 9) is provided between the main region 50a of the light guide sheet 50 and the main region 20a of the printed circuit board 20 by the holding plate 30 in the present embodiment. This causes the upper surface of the main region 20a of the printed circuit board 20 to be the region on which mounting is possible. Thus, the plurality of electronic components 29 constituting a display control circuit for controlling the operation of the liquid crystal display panel 60 and the LED 23 are mounted on the main region 20a of the printed circuit board 20. In this way, the holding plate 30, the light guide sheet 50 and the liquid crystal display panel 60 are arranged in order on the plurality of electronic components 29 mounted on the printed circuit board 20. Accordingly, the printed circuit board 20, the holding plate 30, the light guide sheet 50 and the liquid crystal display panel 60 can be accommodated in the small upper case 70 and the lower case 10. As a result, the display 1 can be downsized.

The LED 27 is directly mounted on the end region 20b of the printed circuit board 20, and the end region 50b is curved such that the end surface 50c of the end region 50b of the light guide sheet 50 is opposite to the light emitting surface of the LED 27. Therefore, the end surface 50c of the light guide sheet 50 is automatically positioned at the height of the LED 27 on the printed circuit board 20. Thus, light emitted from the LED 27 can easily and accurately be incident on the end surface 50c of the light guide sheet 50. Accordingly, a sufficient amount of light can be directed from the upper surface of the light guide sheet 50 to the back surface of the liquid crystal display panel 60.

Furthermore, since the LED 27 is mounted directly on the upper surface of the printed circuit board 20, a lead wire need not be provided so as to be lifted from the printed circuit board 20 for electrical connection between the LED 27 and the printed circuit board 20. This does not cause problems to be caused by a broken or disconnected lead wire. This eliminates the necessity of taking measurements against the problems to be caused by the broken or disconnected lead wire. As a result, the display 1 is easily manufactured and made highly reliable.

Since the upper surface of the main region 50a of the holding plate 30 has a function of reflecting light, the light leaking out from the lower surface of the main region 50a of the light guide sheet 50 is reflected on the upper surface of the main region 30a of the holding plate 30. This causes the light to be efficiently emitted from the upper surface of the main region 50a of the light guide sheet 50.

The lower surface of the main region 50a of the light guide sheet 50 is in contact with the upper surface of the main region 30a of the holding plate 30. Furthermore, the lower surface of the end region 50b of the light guide sheet 50 is in contact with the lower surface of the end region 30b of the holding plate 30. Accordingly, the main region 50a of the light guide sheet 50 opposing to the liquid crystal display panel 60 is held to be flat by the flat main region 30a of the holding plate 30, and the curved shape of the end region 50b of the light guide sheet 50 is held by the curved end region 30b of the holding plate 30. This prevents deformation such as flexure of the light guide sheet 50.

In particular, the lower surface of the holding portion 74 of the upper case 70 has the cross sectional shape corresponding to the end region 30b of the holding plate 30, and the end region 50b of the light guide sheet 50 is sandwiched between the holding portion 74 and the holding plate 30 . Thus, the end region 50b of the light guide sheet 50 is held to be curved along the upper surface of the end region 30b of the holding plate 30. As a result, the end surface 50c of the end region 50b of the light guide sheet 50 is more reliably opposite to the light emitting surface of the LED 27.

In assembly of the display 1, the end region 50b of the light guide sheet 50 is sandwiched between the holding portion 74 of the upper case 70 and the holding plate 30. In this state, the positioning projection 77 of the holding portion 74 is inserted in the holes 35a of the holding plate 30 through the holes 52 of the light guide sheet 50. Thus, the holding plate 30, the light guide sheet 50 and the holding portion 74 are accurately positioned with one another, and the holding plate 30 and the light guide sheet 50 are held in the upper case 70. In this way, the holding plate 30 and the light guide sheet 50 are easily positioned within the upper case 70.

The convex portion 35 of the holding plate 30 is fitted in the opening 26 of the printed circuit board 20. This causes the holding plate 30 and the printed circuit board 20 to be accurately positioned with each other. Furthermore, the holding plate 30 and the printed circuit board 20 can easily be positioned in the assembly of the display 1.

The connecting member 40 inserted into the slit 34 of the holding plate 30 electrically connects the printed circuit board 20 and the liquid crystal display panel 60. This allows the electrical connection between the printed circuit board 20 and the liquid crystal displaypanel 60 without using any lines that bypass the holding plate 30. As a result, the wiring configuration of the display 1 is simplified.

Since the end surface 50c of the end region 50b of the light guide sheet 50 is perpendicular to the direction in which the end region 50b and the main region 50a are arranged (the direction of the front side 51a and the rear side 51b) , the light incident on the end surface 50c of the end region 50b of the light guide sheet 50 travels in a straight line to be introduced to the main region 50a. Accordingly, the light generated by the LED 27 is efficiently emitted from the upper surface of the main region 50a of the light guide sheet 50.

Since each of the LEDs 23 is surrounded by each of the cylindrical bodies 33, no external light is incident on the LEDs 23. This allows excellent visibility of the plurality of display portions 63.

Since the LEDs 23, 27 are used as the first and second light emitting devices, the backlight device 2 with higher luminance is realized at lower cost. This allows for lower cost and improved visibility of the display 1.

### (7) Motorcycle Including the Display

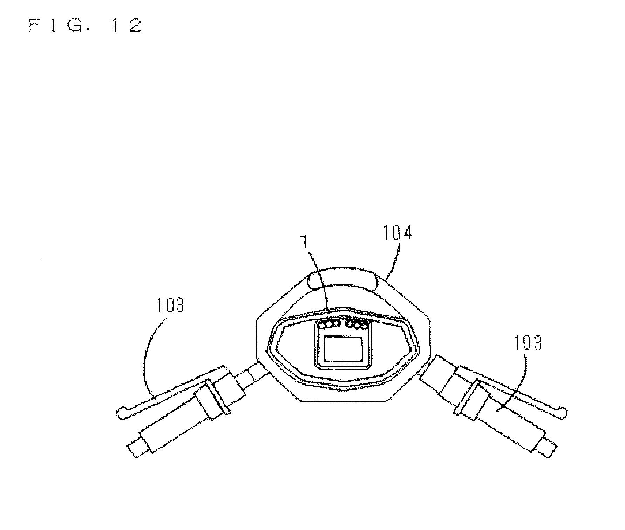

Fig. 11 is a side view of a motorcycle including the display 1 shown in Figs. 1 to 10. Fig. 12 is a plan view of a portion of the motorcycle of Fig. 11 including the display 1.

A head pipe 102 is provided at the front end of a main body frame 101 in the motorcycle 100 shown in Fig. 11. A handle 103 is provided at the upper end of the head pipe 102. A front cover 104 is provided in an upper portion of the head pipe 102.

A front fork 105 is attached to the lower end of the head pipe 102. In this state, the front fork 105 is rotatable within a given angular range around the axial center of the head pipe 102. A front wheel 106 is rotatably supported at the lower end of the front fork 105.

An engine 107 and the ECU (Electronic Control Unit) 108 are provided at a center portion of the main body frame 101. A battery 109 is provided below a main body seat 110 or within a side cover.

A rear arm 111 is connected to the main body frame 101 to extend to the rear of the engine 107. A rear wheel 112 and a rear wheel driven sprocket 113 are rotatably held by the rear arm 111 . A chain 115 is attached to the rear wheel driven sprocket 113.

As shown in Fig. 12, the display 1 of Figs. 1 to 10 is mounted on the front cover 104. In this case, screws are inserted in the screw holes 14a of the attachment portions 14 of Fig. 1, thereby fixing the display 1 to the front cover 104. The connector 25 (see Figs. 2 and 3) of the display 1 is connected to the ECU 108 of Fig. 11.

Output signals from a plurality of sensors such as a sensor for detecting rotation speed of the rear wheel 112 of the motorcycle 100, a sensor for detecting a remaining amount of fuel, a sensor for detecting temperature of cooling water, a sensor for detecting a gear position of a transmission (not shown) are applied to the ECU 108. The ECU 108 supplies control signals for controlling display of the liquid crystal display screen 61 and the plurality of display portions 63 to the display 1.

Downsizing, lower cost and higher reliability of the display 1 can be realized. This allows for reduced space for attaching the display 1 in the motorcycle 100, and higher performance, higher reliability and lower cost of the motorcycle 100.

### (8) Other Embodiments

While the display 1 is attached to the front cover 104 in the above-described embodiment, the display 1 may be attached to the handle 103.

In the above-described embodiment, information such as traveling speed, traveling distance and the like of the vehicle is displayed on the liquid crystal display screen 61 as the state of the main body. Other information such as rotation speed, temperature and the like of the engine 107 may be displayed on the liquid crystal display screen 61 as the state of the driving unit.

While the upper surface of the holding plate 30 is processed to have a mirror finish so as to reflect light in the above-described embodiment, the present invention is not limited to this and, for example, a reflection layer such as a metallic layer may be formed on the upper surface of the holding plate 30.

While a plurality of diffusion dots are formed on the lower surface of the light guide sheet 50 in the above-described embodiment, the present invention is not limited to this and, for example, a reflection layer that reflects light may be formed on the lower surface of the light guide sheet 50.

The curved shape of the light guide sheet 50 is not limited to the curved shape of the above-described embodiment. For example, the light guide sheet 50 may be curved such that the end region 50b of the light guide sheet 50 has repetitive irregularities by plural times and then levels off.

While the display 1 is applied to the motorcycle 100 of scooter type as one example of the saddle-straddling type vehicle in the above-described embodiment, the present invention is not limited to this. The display 1 may be applied to a motorcycle, which is not of scooter type.

The display 1 can also be applied to other saddle-straddling type vehicles that travel with users straddling their seats, such as a bicycle, a three-wheeled vehicle, a buggy-type four-wheeled vehicle (ATV (All Terrain Vehicle)) and a snowmobile.

### (9) Correspondences between Elements in the Claims and Parts in Embodiments

In the following paragraphs, non-limiting examples of correspondences between various elements recited in the claims below and those described above with respect to various preferred embodiments of the present invention are explained.

In the above-described embodiments, the printed circuit board 20 is an example of a printed circuit board, the main region 20a is an example of a first region, the liquid crystal display panel 60 is an example of a liquid crystal display panel, the light guide sheet 50 is an example of a light guide sheet, the electronic component 29 is an example of an electronic component, the end region 20b is an example of an outside first region, and the LED 29 is an example of a first light emitting device.

The holding plate 30 is an example of a supporting member, the upper case 70 is an example of a case, the liquid crystal display screen 61 is an example of a display screen, the display window 73 is an example of a window, the display control circuit constituted by the plurality of electronic components 29 is an example of an electronic circuit, the end surface 50c of the light guide sheet 50 is an example of an end surface of a light guide sheet, the upper surface of the light guide sheet 50 is an example of one surface (a first main surface) of the light guide sheet, and the lower surface of the light guide sheet 50 is an example of another surface (a second main surface) of the light guide sheet. The end region 50b of the light guide sheet 50 is an example of part of the light guide sheet. The end region of the light guide sheet 50 is a curved partial region of the light guide sheet 50.

Note that a curved part of the light guide sheet 50 is a portion that is outside the partial region of the light guide sheet and has an end surface on which light can be incident.

The upper surface of the holding plate 30 is an example of a contact surface, the upper surface of the main region 30a of the holding plate 30 is an example of a flat portion of a contact surface of the supporting member, and the upper surface of the end region 30b of the holding plate 30 is an example of a curved portion of the contact surface of the supporting member.

The holding portion 74 is an example of a shape holder, the lower surface of the holding portion 74 is an example of a contact portion of the shape holder, the positioning projection 77 of the holding portion 74 is an example of a positioning projection of the shape holder, the hole 52 of the light guide sheet 50 is an example of a positioning hole of the light guide sheet, and the hole 35a of the holding plate 30 is an example of a positioning hole of the supporting member.

The opening 26 of the printed circuit board 20 is an example of a positioning hole, the projection 35 of the holding plate 30 is an example of a projection of the supporting member, the slit 34 of the holding plate 30 is an example of a connection opening, the connecting member 40 is an example of a connecting member, the front region 20c is an example of an outside second region, the LED 23 is an example of a second light emitting device, and the cylindrical body 33 is an example of a cylindrical body.

The motorcycle 100 is an example of a transport apparatus, the main body frame 101 is an example of a main body, and the engine 107 and the rear wheel 112 are an example of a driving unit.

As each of various elements recited in the claims, various other elements having configurations or functions described in the claims can be also used.

### [Industrial Applicability]

The present invention is widely applicable to various saddle-straddling type vehicles such as a motorcycle, a bicycle, a three-wheeled vehicle, a buggy-type four-wheeled vehicle and a snowmobile.

## Claims

1. A display for a saddle-straddling type vehicle comprising:
a printed circuit board;
a liquid crystal display panel arranged on a partial region of said printed circuit board at a distance from said printed circuit board;
a light guide sheet arranged between said printed circuit board and said liquid crystal display panel;
an electronic component mounted in the partial region of said printed circuit board;
a first light emitting device mounted in a first region outside the partial region of said printed circuit board;
a supporting member that supports said light guide sheet on said electronic component mounted in the partial region; and
a case that accommodates said printed circuit board, said liquid crystal display panel, said light guide sheet and said supporting member, wherein
said case has a window for visually confirming a display screen of said liquid crystal display panel,
said electronic component constitutes at least part of an electronic circuit connected to said liquid crystal display panel and said first light emitting device,
said light guide sheet has an end surface on which light can be incident, one surface which is opposite to said liquid crystal display panel and from which light can be emitted, and another surface being in contact with said supporting member, and
part of said light guide sheet is curved to extend to the first region of said printed circuit board such that the end surface is opposite to a light emitting surface of said first light emitting device.

2. The display for a saddle-straddling type vehicle according to claim 1, wherein said supporting member has a contact surface coming into contact with said other surface of said light guide sheet, wherein
said contact surface has a flat portion that is positioned between the partial region of said printed circuit board and said liquid crystal display panel, and a curved portion that curves so as to come close to said first light emitting device from the flat portion.

3. The display for a saddle-straddling type vehicle according to claim 2, wherein said contact surface of said supporting member is formed so as to reflect light.

4. The display for a saddle-straddling type vehicle according to claim 2, wherein said case has a shape holder arranged to hold a shape of the curved part of said light guide sheet, wherein
said shape holder includes a contact portion having a cross-sectional shape that corresponds to the curved portion of said supporting member, and
the curved part of said light guide sheet is arranged so as to be sandwiched between the contact portion of said shape holder and the curved portion of said supporting member.

5. The display for a saddle-straddling type vehicle according to claim 4, wherein said shape holder has a positioning projection,
said light guide sheet has a positioning hole through which the positioning projection of said shape holder passes, and
said supporting member has a positioning hole in which the positioning projection of said shape holder is inserted.

6. The display for a saddle-straddling type vehicle according to claim 1, wherein said printed circuit board has a positioning opening, and
said supporting member has a convex portion to be fitted in the positioning opening of said printed circuit board.

7. The display for a saddle-straddling type vehicle according to claim 1, wherein said supporting member has a connection opening, and
said display for a saddle-straddling type vehicle further includes a connecting member, wherein
said connecting member is inserted into the connection opening of said supporting member to electrically connect said printed circuit board and said liquid crystal display panel.

8. The display for a saddle-straddling type vehicle according to claim 1, wherein said display for the saddle-straddling type vehicle further includes a second light emitting device mounted in a second region outside the partial region of said printed circuit board, and
the window of said case is formed such that said second light emitting device is visually confirmed.

9. The display for a saddle-straddling type vehicle according to claim 1, wherein said supporting member further has a cylindrical body that surrounds said second light emitting device.

10. The display for a saddle-straddling type vehicle according to claim 1, wherein said first light emitting device is a light emitting diode.

11. A saddle-straddling type vehicle comprising:
a main body;
a driving unit for moving said main body; and
said display for a saddle-straddling type vehicle according to claim 1, wherein
said display for a saddle-straddling type vehicle displays a state of at least one of said main body and said driving unit.
